# EUROPEAN PATENT SPECIFICATION

(11) **EP 4 715 537 B1**
(45) Date of publication and mention of the grant of the patent: **14.10.2026**
(21) Application number: 25197689.0
(22) Date of filing: 22.08.2025
(51) Int. Cl.: G06F 3/0346, G06F 3/0354

(54) **INFORMATION PROCESSING METHOD, INFORMATION PROCESSING SYSTEM, AND INFORMATION PROCESSING PROGRAM**
INFORMATIONSVERARBEITUNGSVERFAHREN, INFORMATIONSVERARBEITUNGSSYSTEM UND INFORMATIONSVERARBEITUNGSPROGRAMM
PROCÉDÉ, SYSTÈME ET PROGRAMME DE TRAITEMENT D'INFORMATIONS

(30) Priority: 18.09.2024 JP 2024160832
(43) Date of publication of application: 25.03.2026
(73) Proprietor: Nintendo Co., Ltd., Kyoto 601-8501 (JP)
(72) Inventor: AOKI, Ryoma, Kyoto, 601-8501 (JP); SHIMOHATA, Yasuyuki, Kyoto, 601-8501 (JP); KOBAYASHI, Masato, Kyoto, 601-8501 (JP)
(74) Representative: Bardehle Pagenberg Partnerschaft mbB Patentanwälte Rechtsanwälte

(56) References cited:
- US-A1- 2006 187 208
- US-A1- 2023 241 513
- US-A1- 2024 103 643

## Description

### CROSS REFERENCE TO RELATED APPLICATION

This application claims priority to Japanese Patent Application No. 2024-160832 filed on September 18, 2024.

### FIELD

The present disclosure relates to information processing.

### BACKGROUND AND SUMMARY

Conventionally, games for which a mouse is used have been known. US patent application US 2024/103643 A1 suggests a computer system including a tilt sensor disposed in an internal volume, a position sensor disposed at the aperture, and a processor. The processor can be electrically coupled to the position sensor, the tilt sensor, and a memory component storing electronic instructions that, when executed by the processor, cause the processor to receive a first input from the tilt sensor, receive a second input from the position sensor, determine, based on the first and second inputs, if the base is in contact with a support surface and an angle of the base relative to the support surface. The processor can also output a signal based on the angle if the base is in contact with the support surface.

There has been a need for a new control method using an input device having a mouse sensor.

For example, the following configuration examples are exemplified.

One configuration example is directed to an information processing method using an input device including an inertial sensor, an optical mouse sensor, and a housing having a bottom portion having an opening of a light guide path for guiding light to the mouse sensor, the information processing method including: determining a first state where the opening is closed, based on output of the mouse sensor; determining a second state where the bottom portion is facing downward, based on output of the inertial sensor; determining a third state where the input device is stationary around at least a first axis among axes parallel to the bottom portion, based on the output of the inertial sensor; and controlling a displayed virtual object, based on the output of the mouse sensor, when at least the first state, the second state, and the third state are determined.

According to the above configuration example, it is possible to accurately estimate that the input device is being used like a mouse by a user, thereby enabling control of the virtual object in accordance with the user's intention.

**In** another configuration example, the input device may have an upper portion on a side opposite to the bottom portion, and a front portion and a rear portion connecting the bottom portion and the upper portion on a front side and a rear side, respectively, in a front-rear direction that is parallel to the bottom portion and is a longitudinal direction, the input device may include a first button on at least one of the front portion side of the upper portion or the front portion, and the third state may be at least a state of being stationary around the first axis extending in a left-right direction that is parallel to the bottom portion and perpendicular to the front-rear direction.

When the input device is used as a mouse, frontward or rearward tilt may be less likely to occur. According to the above configuration example, by determining whether the input device is stationary around at least the first axis, it is possible to accurately estimate that use as a mouse is intended.

**In** another configuration example, the third state may be a state where a first parameter indicating a degree of rotation around the first axis is equal to or less than a first threshold value.

According to the above configuration example, since a certain degree of rotation around the first axis of the input device can be allowed, for example, the input device can be allowed to be used as a mouse on a placement surface having a curved surface.

In another configuration example, the third state may further be a state where a second parameter indicating a degree of rotation around a second axis extending in the front-rear direction is equal to or less than a second threshold value greater than the first threshold value.

According to the above configuration example, by also considering left-right tilt of the input device, it is possible to accurately determine use of the input device as a mouse. In addition, while the input device is being used as a mouse, left-right tilt of the input device may be more likely to occur compared to front-rear tilt of the input device. Therefore, by setting a threshold value for determining left-right tilt relatively higher than that for determining front-rear tilt, wrong determination can be suppressed.

In another configuration example, the third state may be a state where the first parameter is equal to or less than the first threshold value regardless of a value of the second parameter indicating the degree of rotation around the second axis extending in the front-rear direction.

While the input device is being used as a mouse, left-right tilt of the input device may be likely to occur. According to the above configuration example, by allowing left-right tilt and determining front-rear tilt, wrong determination can be suppressed.

In another configuration example, the input device may be longer in an up-down direction perpendicular to the front-rear direction and the left-right direction than in the left-right direction.

According to the above configuration example, the input device is easy to hold when the user uses the input device as a mouse, and the input device is also easy to operate on a thigh, for example.

In another configuration example, the second state may be a state where a third axis perpendicular to the bottom portion is tilted at 45 degrees or less relative to a direction of gravity.

According to the above configuration example, a certain degree of downward tilt can be allowed.

In another configuration example, the information processing method may further include switching from a first information processing state where the virtual object is not displayed to a second information processing state where the virtual object is displayed, based on at least the first state, the second state, and the third state being determined.

According to the above configuration example, since the virtual object is displayed when the virtual object can be operated, it is easy for the user to recognize that the virtual object can be operated, i.e., that the virtual object has transitioned to an operable state.

In another configuration example, the information processing method may further include: determining a fourth state where the input device is moving on a placement surface, based on the output of the mouse sensor; and controlling the displayed virtual object, based on the output of the mouse sensor, when the fourth state is determined in addition to the first state, the second state, and the third state being determined.

In another configuration example, the input device may have an upper portion on a side opposite to the bottom portion, and a front portion and a rear portion connecting the bottom portion and the upper portion on a front side and a rear side, respectively, in a front-rear direction that is parallel to the bottom portion and is a longitudinal direction, the input device may include a first button on at least one of the front portion side of the upper portion or the front portion, and the information processing method may further include: executing a predetermined process in response to an operation on the first button when at least the first state, the second state, and the third state are determined; and not executing the predetermined process in response to the operation when at least one of the first state, the second state, and the third state is not determined.

According to the above configuration example, the input device can be operated appropriately according to the operation state of the input device.

In another configuration example, the input device may include a second button, and the information processing method may further include executing the predetermined process in response to an operation on the second button when at least one of the first state, the second state, and the third state is not determined.

According to the above configuration example, the input device can be operated appropriately according to the operation state of the input device.

In another configuration example, the third state may include a state where the input device has been stationary around the first axis for a first period.

According to the above configuration example, wrong determination of the input device can be suppressed.

In another configuration example, the input device may have an upper portion on a side opposite to the bottom portion, a fifth state where an acceleration equal to or greater than a predetermined value in a direction from the bottom portion to the upper portion has occurred may be determined based on the output of the inertial sensor, and the displayed virtual object may be operated based on the output of the mouse sensor, when at least the first state, the second state, and the fifth state are determined.

According to the above configuration example, by determining the occurrence of upward acceleration of the input device, it is determined that the input device is placed on the placement surface, thereby enabling prompt transition of the operation state in accordance with the user's intention.

In another configuration example, a sixth state where the input device has been stationary around the first axis for a second period less than the first period may be determined based on the output of the inertial sensor, and control of the displayed virtual object based on the output of the mouse sensor may be stopped when the sixth state is not determined while the displayed virtual object is being controlled based on the output of the mouse sensor.

According to the above configuration example, when the input device is separated from the placement surface, this is determined in a short time, thereby enabling prompt transition of the operation state in accordance with the user's intention.

In another configuration example, the input device may have an upper portion on a side opposite to the bottom portion, a third information processing state where the virtual object is not displayed may be switched to based on at least the first state, the second state, and the third state being determined in a first information processing state where the virtual object is not displayed, a fourth state where at least the input device is moving on a placement surface may be determined based on the output of the mouse sensor, a sixth state where the input device has been stationary around the first axis for a second period less than the first period may be determined based on the output of the inertial sensor, and a second information processing state where the virtual object is displayed may be switched to based on at least the first state, the second state, the fourth state, and the sixth state being determined in the third information processing state.

According to the above configuration example, the presence of the third information processing state enables the construction of a more flexible control system.

In another configuration example, the information processing method may include at least operating system processing and application processing, and the operating system processing may include storing information regarding a determination result of the first state and information regarding a determination result of at least the first state, the second state, and the third state being determined, such that each of the information is usable in the application processing.

According to the above configuration example, the application can perform not only control based on the determination results of the first state, the second state, and the third state but also control based on the information regarding the determination result of the first state.

In another configuration example, the information processing method may include at least operating system processing, and the operating system processing may include: determining whether the input device is at least set to a longitudinal holding setting or a horizontal holding setting; and determining the first state, the second state, and the third state if the input device is determined to be set to the longitudinal holding setting or the horizontal holding setting.

According to the above configuration example, flexibility can be provided in the processing by the application.

According to the exemplary embodiments, for example, a new information processing method using an input device having a mouse sensor, etc., can be provided.

### BRIEF DESCRIPTION OF THE DRAWINGS

FIG. 1 is a diagram showing an example of a state where a right controller 3 and a left controller 4 are attached to a main body apparatus 2;
FIG. 2 is six orthogonal views showing an example of the right controller 3;
FIG. 3 is six orthogonal views showing an example of the left controller 4;
FIG. 4 is a block diagram showing an example of the internal configuration of the main body apparatus 2;
FIG. 5 is a block diagram showing an example of the internal configurations of the main body apparatus 2, the right controller 3, and the left controller 4;
FIG. 6 is a diagram showing an example of a state where the right controller 3 is operated while being grasped by a right hand;
FIG. 7 is a diagram showing an example of a state where the right controller 3 is operated while being grasped by a right hand;
FIG. 8 is a diagram showing an example of a state where the right controller 3 is operated while being grasped by both hands;
FIG. 9 is a diagram for describing state transitions of the controller;
FIG. 10 is a functional block diagram for describing the function, etc., of the main body apparatus 2;
FIG. 11 is a diagram showing an example of a screen display;
FIG. 12 is a diagram showing an example of various data stored in a DRAM 69;
FIG. 13 is an example of a flowchart of information processing;
FIG. 14 is an example of a flowchart of the information processing;
FIG. 15 is an example of a flowchart of the information processing; and
FIG. 16 is an example of a flowchart of the information processing.

### DETAILED DESCRIPTION OF NON-LIMITING EXAMPLE EMBODIMENTS

Hereinafter, an exemplary embodiment will be described.

### [Example of hardware configuration of information processing system]

Hereinafter, a game system which is an example of an information processing system of the exemplary embodiment will be described. An example of a game system 1 according to the exemplary embodiment includes an information processing apparatus (sometimes referred to as "main body apparatus") 2, a left controller 4, and a right controller 3. The main body apparatus 2 according to the exemplary embodiment allows the left controller 4 and the right controller 3 to be attached thereto and detached therefrom.

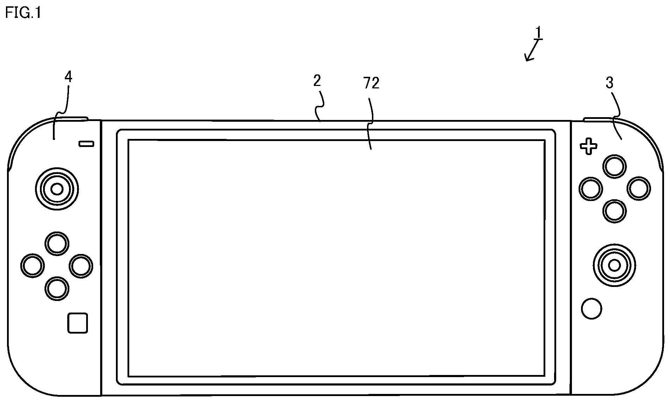

FIG. 1 is a diagram showing an example of a state where the left controller 4 and the right controller 3 are attached to the main body apparatus 2. As shown in FIG. 1, the left controller 4 and the right controller 3 are attached to and integrated with the main body apparatus 2. The main body apparatus 2 is an apparatus for executing various kinds of processing (e.g., game processing) in the game system 1. The main body apparatus 2 includes a display 72. The left controller 4 and the right controller 3 are each an input device including operation portions and the like on which a user performs input. Hereinafter, the left controller 4 and the right controller 3 are sometimes collectively referred to as "controller".

The main body apparatus 2 includes the display 72. The display 72 displays images generated by the main body apparatus 2. The display 72 is, for example, a liquid crystal display device (LCD). A touch panel is provided on the screen of the display 72. The touch panel is, for example, a type capable of receiving a multi-touch input (e.g., electrical capacitance type).

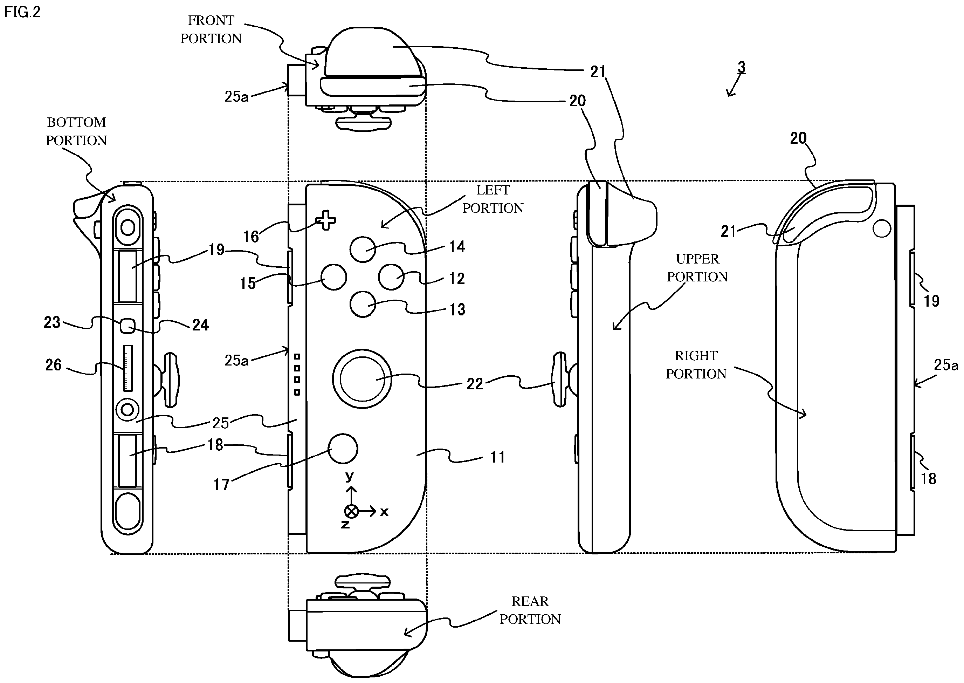

FIG. 2 is six orthogonal views schematically showing an example of the right controller 3. As shown in FIG. 2, the right controller 3 has a vertically long plate shape, has a housing 11, and has a front portion, a rear portion, an upper portion, a bottom portion, a right portion, and a left portion. In the right controller 3, the rear portion is located on a side opposite to the front portion, the bottom portion is located on a side opposite to the upper portion, and the left portion is located on a side opposite to the right portion. The distance between the front portion and the rear portion is larger than the distance between the upper portion and the bottom portion. The distance between the upper portion and the bottom portion is larger than the distance between the right portion and the left portion. In another exemplary embodiment, these distances may have another magnitude relationship. In the exemplary embodiment, a direction connecting the bottom portion and the upper portion may be referred to as an up-down direction, a direction perpendicular to the up-down direction and connecting the front portion and the rear portion is referred to as a front-rear direction, and a direction perpendicular to the up-down direction and connecting the right portion and the left portion is referred to as a left-right direction. In FIG. 2, x, y, and z axes are shown on a front view in which the left portion faces the near side, and represent a coordinate system of the right controller 3. In this coordinate system, a direction heading toward the right portion from the left portion is a z-axis plus direction. A direction perpendicular to the z axis and heading toward the upper portion from the bottom portion is an x-axis plus direction. A direction perpendicular to the z axis and the x axis and heading toward the front portion from the rear portion is a y-axis plus direction. When the bottom portion is directed in the gravity direction, an x-axis minus direction and the gravity direction coincide with each other. In the exemplary embodiment, portions such as the front portion and the bottom portion need not be perfectly flat, and may have a recess, a projection, and/or a slope. For example, the bottom portion includes a protruding portion 25 described later. A direction in which each portion faces and a direction connecting the portions are shown as approximate directions.

The right controller 3 has the protruding portion 25 which is fitted into a recessed portion (not shown) of the main body apparatus 2 in a state where the right controller 3 is attached to the main body apparatus 2. As shown in FIG. 2, the protruding portion 25 has a protruding shape protruding in the x-axis minus direction and having a left-right width shorter than that of the right controller 3 and a front-rear width shorter than that of the right controller 3. In the exemplary embodiment, the protruding portion 25 is a part of the bottom portion.

As described later, the right controller 3 can be grasped in an orientation in which the right controller 3 is vertically long, in a state of being detached from the main body apparatus 2. The right controller 3 has such a shape and a size that the right controller 3 can be grasped by one hand, in particular, a right hand, in a case of being grasped in the orientation in which the right controller 3 is vertically long. The right controller 3 can also be grasped in an orientation in which the right controller 3 is horizontally long, and may be grasped by both hands in a case of being grasped in the orientation in which the right controller 3 is horizontally long.

The right controller 3 has, at the left portion, an analog stick (sometimes simply referred to as a "stick") 22 which is an example of a directional input portion. The stick 22 can be used as a directional input portion via which a direction can be inputted. The user can perform directional input corresponding to a tilt direction by tilting the stick 22 in a desired direction, and can perform input with a magnitude corresponding to the tilt angle. In addition, the user can perform button input by pushing the stick 22 in. The directional input portion may, for example, be a directional pad or a slide pad.

The right controller 3 has, at the left portion, a set of four buttons which are an A button 12, a B button 13, an X button 14, and a Y button 15, a + (plus) button 16, and a home button 17. The right controller 3 has an R button 20 and a ZR button 21 over a range from the front portion to the upper portion. The R button 20 and the ZR button 21 may be provided at only the front portion of the right controller 3, or may be provided only at the upper portion of the right controller 3. The right controller 3 has a button 18 and a button 19 at a top surface 25a of the protruding portion 25.

The right controller 3 has an opening 23 for a mouse sensor, at the top surface 25a of the protruding portion 25. The opening 23 for a mouse sensor is an opening of a light guide path for guiding light to a mouse sensor 24 provided inside the right controller 3. The mouse sensor 24 is an optical mouse sensor and may include a light emitting portion and a light receiving portion. Light to be detected by the light receiving portion may be visible light or light having an invisible wavelength. The mouse sensor 24 includes at least a light receiving portion and may not necessarily include a light emitting portion. The mouse sensor 24 acquires data that enables calculation of movement or the like, on a placement surface, of the right controller 3 placed such that the top surface 25a of the protruding portion 25 of the bottom portion faces the placement surface. Thus, the right controller 3 can be used also as a mouse. In the exemplary embodiment, the direction in which the bottom portion extends when the right controller 3 is placed on the placement surface with the top surface 25a facing the placement surface is parallel to the direction in which the placement surface extends.

In the exemplary embodiment, the right controller 3 has, at the protruding portion 25, a terminal 26 for the right controller 3 to perform wired communication with the main body apparatus 2. The terminal 26 is provided on the inner peripheral surface of a recess formed in the top surface 25a of the protruding portion 25, for example.

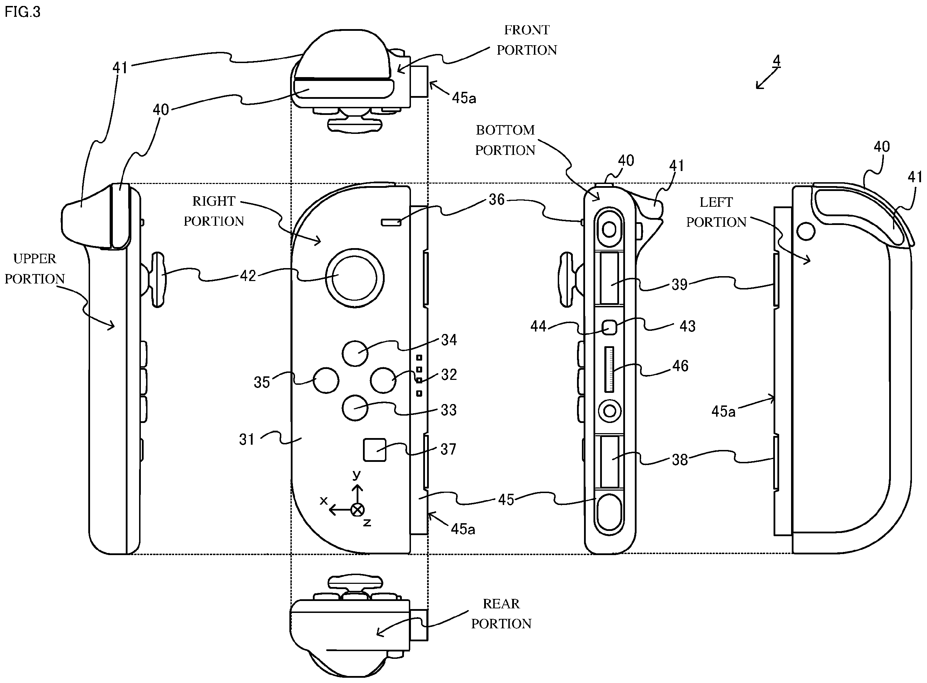

FIG. 3 is six orthogonal views schematically showing an example of the left controller 4. The description of similar configurations as those of the right controller 3 is omitted. The left controller 4 has, at a right portion, a stick 42, a set of four buttons which are a right direction button 32, an up direction button 33, a down direction button 34, and a left direction button 35, a capture button 37, and a - (minus) button 36. The buttons 32 to 35 may be one directional pad. In the right controller 3, the stick 22 is located rearward of the buttons 12 to 15, whereas in the left controller 4, the stick 42 is located frontward of the buttons 32 to 35. In FIG. 3, x, y, and z axes are shown on a front view in which the right portion faces the near side, and represent a coordinate system of the left controller 4. In this coordinate system, a direction heading toward the left portion from the right portion is a z-axis plus direction. A direction perpendicular to the z axis and heading toward the upper portion from the bottom portion is an x-axis plus direction. A direction perpendicular to the z axis and the x axis and heading toward the front portion from the rear portion is a y-axis plus direction. When the bottom portion is directed in the gravity direction, an x-axis minus direction and the gravity direction coincide with each other.

The left controller 4 has a protruding portion 45 which is fitted into a recessed portion (not shown) of the main body apparatus 2 in a state where the left controller 4 is attached to the main body apparatus 2. As with the right controller 3, the protruding portion 45 includes buttons 38 and 39, an opening 43 for a mouse sensor, a mouse sensor 44, and a terminal 46.

As with the right controller 3, the left controller 4 can be grasped in an orientation in which the left controller 4 is vertically long or horizontally long, in a state of being detached from the main body apparatus 2.

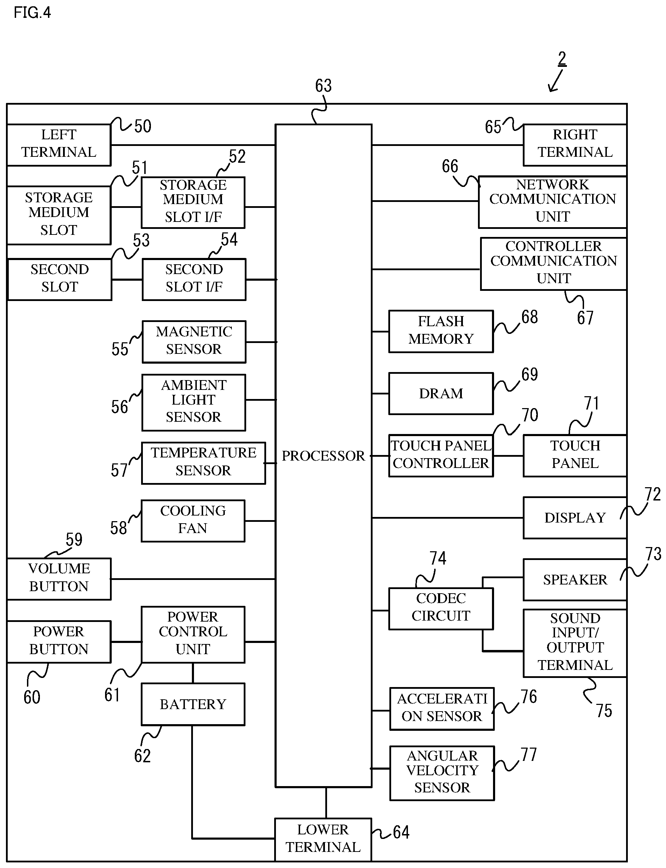

FIG. 4 is a block diagram showing an example of the internal configuration of the main body apparatus 2. The main body apparatus 2 includes a processor 63. The processor 63 is an information processing unit which executes various kinds of information processing to be executed in the main body apparatus 2. The processor 63 may be composed of, for example, a plurality of processors and cores, or typically, a plurality of CPUs (Central Processing Units) and cores, or may be formed by a SoC (System-on-a-chip) including a plurality of functions such as a CPU function and a GPU (Graphics Processing Unit) function. The processor 63 executes various kinds of information processing by executing an information processing program (e.g., a game program, etc.) stored in a storage unit (specifically, an internal storage medium such as a flash memory 68, an external storage medium attached to a slot 51 or the like, etc.). In the exemplary embodiment, the term "processor" may include at least a CPU (Central Processing Unit), a GPU (Graphics Processing Unit), an ASIC (Application Specific Integrated Circuit), an FPGA (Field Programmable Gate Array), etc.

The main body apparatus 2 includes the flash memory 68, and a DRAM (Dynamic Random Access Memory) 69, as an example of an internal storage medium. The flash memory 68 is a memory that is mainly used for storing various data to be stored in the main body apparatus 2. The DRAM 69 is a memory that is mainly used for temporarily storing various data to be used in information processing. The processor 63 reads and writes data from and into storage media such as the flash memory 68 and the DRAM 69 as appropriate, to execute various kinds of information processing.

The main body apparatus 2 includes various components as shown in FIG. 4. Hereinafter, the components will be briefly described. A storage medium slot interface (sometimes referred to as "slot I/F") 52 performs reading/writing of data from/into a storage medium (e.g., a dedicated memory card) attached to the storage medium slot 51, in response to an instruction from the processor 63. A second slot I/F 54 performs reading/writing of data from/into a storage medium attached to a second slot 53, in response to an instruction from the processor 63.

A network communication unit 66 performs communication (e.g., Internet communication using wireless communication) with an external device via a network. A controller communication unit 67 performs wireless communication (e.g., communication compliant with the standard of Bluetooth (registered trademark)) with the left controller 4 and/or the right controller 3.

A left terminal 50 is a terminal for performing wired communication between the processor 63 and the left controller 4. A right terminal 65 is a terminal for performing wired communication between the processor 63 and the right controller 3. A lower terminal 64 is a terminal for performing communication with another apparatus (e.g., a stationary monitor) via a cradle when the lower terminal 64 is attached to the cradle, for example.

A touch panel controller 70 generates data indicating a position at which a touch input was performed, based on a signal from a touch panel 71 disposed on the display surface of the display 72, and outputs the data to the processor 63. The display 72 displays an image generated by the processor 63 and/or an image acquired from the outside.

A codec circuit 74 controls input and output of sound data to and from a speaker 73 and a sound input/output terminal 75.

A power control unit 61 controls supply of power from a battery 62 to each unit of the main body apparatus 2 (i.e., each of units to be supplied with power from the battery 62), based on an instruction from the processor 63, and starts or stops supply of power in response to pressing of a power button 60.

A volume button 59 is a button for adjusting the volume of sound outputted from the speaker 73, etc. In addition, a cooling fan 58 is a fan for cooling the interior of the main body apparatus 2.

The main body apparatus 2 includes various sensors such as a magnetic sensor 55, an ambient light sensor 56, a temperature sensor 57, an acceleration sensor 76, and an angular velocity sensor 77. The processor 63 can execute various kinds of processing, based on information from these sensors.

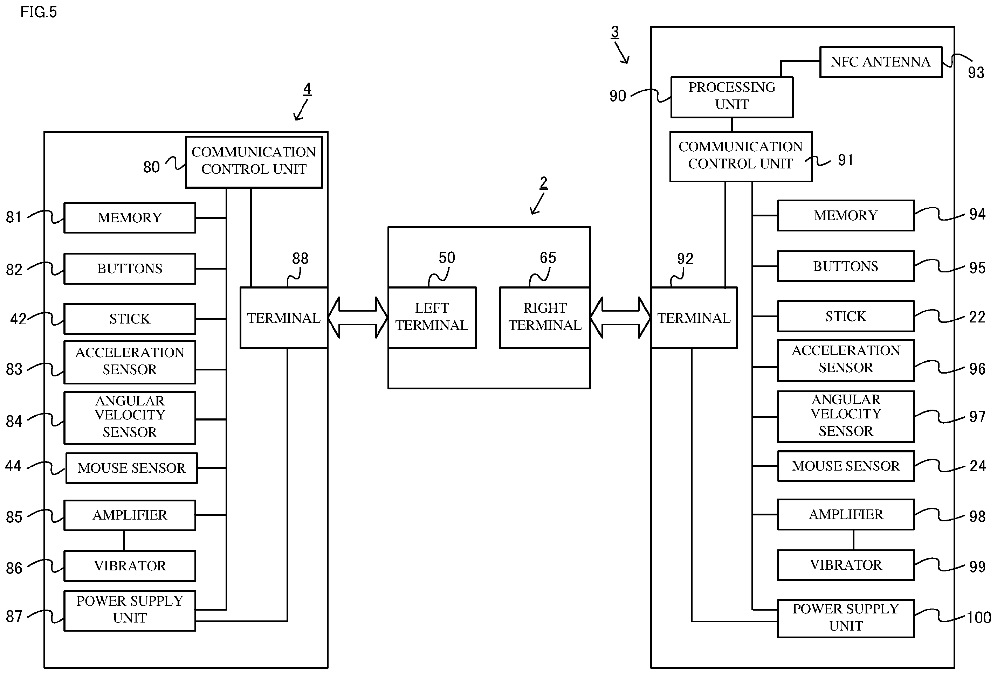

FIG. 5 is a block diagram showing an example of the internal configurations of the main body apparatus 2, the left controller 4, and the right controller 3. The details of the internal configuration of the main body apparatus 2 have already been shown in FIG. 4 and therefore are not shown in FIG. 5.

The left controller 4 includes a communication control unit 80 which performs communication with the main body apparatus 2. As shown in FIG. 5, the communication control unit 80 is connected to various components including a terminal 88. In a state where the left controller 4 is attached to the main body apparatus 2, the communication control unit 80 performs wired communication with the main body apparatus 2 via the terminal 88, and in a state where the left controller 4 is detached from the main body apparatus 2, the communication control unit 80 performs wireless communication (specifically, communication compliant with the standard of Bluetooth (registered trademark)) with the main body apparatus 2.

The left controller 4 includes a memory 81 such as a flash memory, for example. The communication control unit 80 is formed by a processor such as a microcomputer (or a microprocessor), for example, and executes various kinds of processing by executing firmware stored in the memory 81.

The left controller 4 includes each button 82 (specifically, the buttons 32 to 34, etc.) and the stick 42. Each button 82 and the stick 42 output information regarding operations performed thereon, to the communication control unit 80.

The left controller 4 includes an inertial sensor. Specifically, the left controller 4 includes an acceleration sensor 83 and an angular velocity sensor 84. The acceleration sensor 83 detects the magnitudes of accelerations along predetermined three axial directions (e.g., the x, y, and z-axis directions). The acceleration sensor 83 may detect an acceleration along one axial direction or accelerations along two axial directions. The angular velocity sensor 84 detects angular velocities about the predetermined three axes. The angular velocity sensor 84 may detect an angular velocity about one axis or angular velocities about two axes. The acceleration sensor 83 and the angular velocity sensor 84 are connected to the communication control unit 80. The detection results of the acceleration sensor 83 and the angular velocity sensor 84 are repeatedly outputted to the communication control unit 80 at appropriate timings. **In** the exemplary embodiment, the inertial sensor includes an acceleration sensor and an angular velocity sensor. The inertial sensor may be one of the acceleration sensor and the angular velocity sensor or may be another sensor.

The left controller 4 includes the mouse sensor 44. The mouse sensor 44 acquires data for calculating movement or the like of the left controller 4 placed on a placement surface. The data acquired by the mouse sensor 44 is repeatedly outputted to the communication control unit 80 at appropriate timings.

The communication control unit 80 acquires information regarding inputs (information regarding operations on the buttons and the stick and detection results from the sensors) from each input unit (specifically, each button 82, the stick 42, and the respective sensors 83, 84, and 44). The communication control unit 80 transmits the acquired information or operation data including information obtained by performing predetermined processing on the acquired information, to the main body apparatus 2. The operation data is repeatedly transmitted at a rate of one time per predetermined period.

By the above operation data being transmitted to the main body apparatus 2, the main body apparatus 2 can acquire inputs performed on the left controller 4. That is, the main body apparatus 2 can determine operations on each button 82 and the stick 42, based on the operation data. **In** addition, the main body apparatus 2 can calculate information regarding the movement and/or orientation of the left controller 4, based on the operation data (specifically, the detection results of the acceleration sensor 83 and/or the angular velocity sensor 84). Moreover, the main body apparatus 2 can calculate information regarding mouse operations performed on the left controller 4, based on the operation data (specifically, the detection results of the mouse sensor 44).

The left controller 4 includes an amplifier 85 and a vibrator 86. The amplifier 85 amplifies control signals received from the communication control unit 80 and generates drive signals. The vibrator 86 performs vibrating motion in response to the drive signals generated by the amplifier 85 to vibrate the left controller 4.

The left controller 4 includes a power supply unit 87. The power supply unit 87 includes a battery and a power control circuit. The power control circuit is connected to the battery and supplies power to each unit of the left controller 4 (specifically, each of units to be supplied with power from the battery).

As shown in FIG. 5, the right controller 3 includes a communication control unit 91 which is composed of a processor or the like and performs communication with the main body apparatus 2. The right controller 3 includes a memory 94 connected to the communication control unit 91. The communication control unit 91 is connected to components including a terminal 92. The communication control unit 91 and the memory 94 have the same functions as the communication control unit 80 and the memory 81 of the left controller 4. Therefore, the communication control unit 91 is capable of performing communication with the main body apparatus 2 by both of wired communication via the terminal 92 and wireless communication not via the terminal 92, and controls communication that the right controller 3 performs with the main body apparatus 2.

The right controller 3 includes input units similar to those of the left controller 4. Specifically, the right controller 3 includes each button 95 (A button 12, B button 13, X button 14, Y button 15, etc.), the stick 22, an inertial sensor (acceleration sensor 96 and angular velocity sensor 97), and the mouse sensor 24. These input units have the same functions as those of the left controller 4 and operate in the same manner.

The right controller 3 includes an amplifier 98, a vibrator 99, and a power supply unit 100. The amplifier 98, the vibrator 99, and the power supply unit 100 have the same functions as the amplifier 85, the vibrator 86, and the power supply unit 87 of the left controller 4, respectively, and operate in the same manner.

The right controller 3 includes a processing unit 90 and an NFC antenna 93. The processing unit 90 controls the NFC antenna 93 in accordance with an instruction from the main body apparatus 2 via the communication control unit 91. The NFC antenna 93 performs short-range wireless communication based on the standard of NFC (Near Field Communication).

### [Manner of Grasping Controller]

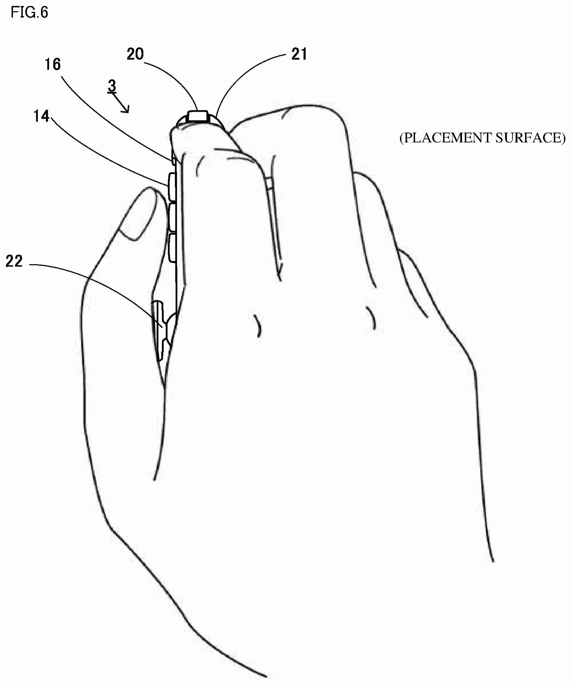

FIG. 6 is a schematic view showing an example of a state where the user grasps the right controller 3 by the right hand, places the right controller 3 on a placement surface, and uses the right controller 3 as a mouse. As shown in FIG. 6, the front portion of the right controller 3 faces frontward and the left portion thereof faces leftward. The palm of the right hand of the user covers the upper portion side of the right controller 3. The thumb of the right hand of the user is placed on the left portion side of the right controller 3. The thumb of the right hand of the user is put on the A button 12, for example. The index finger of the right hand of the user is put on the R button 20, for example, and the middle finger of the right hand of the user is put on the ZR button 21, for example. The user can operate the R button 20 and the ZR button 21 by the index finger or the middle finger of the right hand. The user can operate each input portion provided at the left portion, by the thumb of the right hand. Also, when the user uses the left controller 4 as a mouse by the left hand, the user can grasp the left controller 4 by the left hand and use the left controller 4 on a placement surface in the same manner. At this time, the right portion of the left controller 4 faces rightward. The user may grasp the right controller 3 by the left hand such that the front portion thereof faces frontward, or may grasp the left controller 4 by the right hand such that the front portion thereof face frontward.

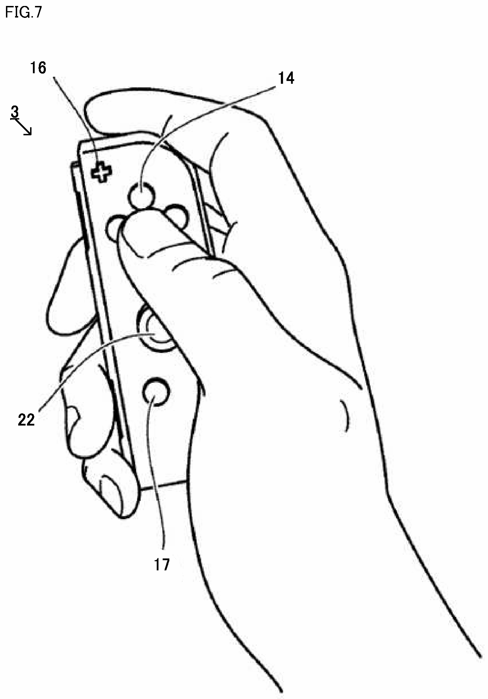

FIG. 7 is a schematic view showing an example of a state where the user operates the right controller 3 while grasping the right controller 3 by the right hand in a longitudinal holding manner. As shown in FIG. 7, in a state where the right controller 3 is detached from the main body apparatus 2, the right controller 3 can be used by being grasped such that the longitudinal direction of the right controller 3 is along the up-down direction or the front-rear direction for the operating user. Also, when the user uses the left controller 4 by the left hand in a state where the left controller 4 is detached from the main body apparatus 2, the user can use the left controller 4 in the same manner.

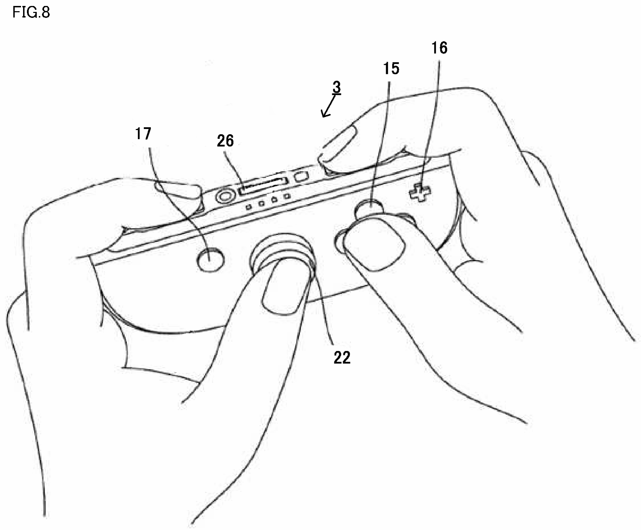

FIG. 8 is a schematic view showing an example of a state where the user operates the right controller 3 while grasping the right controller 3 by both hands in a horizontal holding manner. As shown in FIG. 8, in a state where the right controller 3 is detached from the main body apparatus 2, the right controller 3 is used such that the longitudinal direction of the right controller 3 is along the left-right direction for the operating user. The right controller 3 is grasped by one hand of the user on one side in the longitudinal direction (one side in the up-down direction) and grasped by the other hand of the user on the other side. For example, the index fingers of both hands of the user are put on the bottom portion side of the right controller 3. Also, when the user uses the left controller 4 by both hands in a state where the left controller 4 is detached from the main body apparatus 2, the user can use the left controller 4 in the same manner.

### [States of controller]

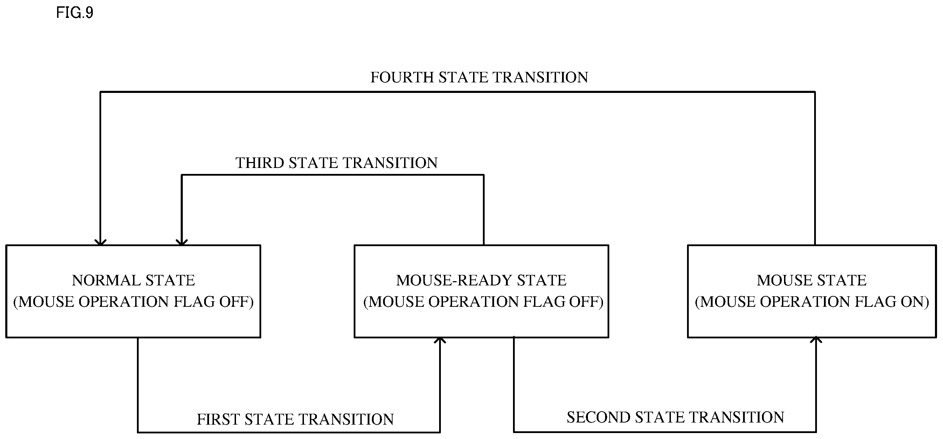

FIG. 9 is a diagram for describing states and state transitions of the controller. As shown in FIG. 9, the states of the controller (sometimes referred to simply as "states") include a "normal state", a "mouse-ready state", and a "mouse state". The mouse-ready state is a state where it is estimated that the controller is ready to be operated as a mouse but has not yet been operated as such. The mouse state is a state where it is estimated that the controller is operated as a mouse. The normal state is a state where the controller is neither in the mouse-ready state nor in the mouse state and is a state where it is estimated that the controller is in an operation state as illustrated in FIG. 7 and FIG. 8, for example.

When a predetermined condition is satisfied in the normal state, a first state transition of transitioning to the mouse-ready state is performed. When a predetermined condition is satisfied in the mouse-ready state, a second state transition of transitioning to the mouse state is performed. When a predetermined condition is satisfied in the mouse-ready state, a third state transition of transitioning to the normal state is performed. When a predetermined condition is satisfied in the mouse state, a fourth state transition of transitioning to the normal state is performed. These predetermined conditions will be described later. In addition, in the normal state and the mouse-ready state, a mouse operation flag is set to OFF, and in the mouse state, the mouse operation flag is set to ON. The mouse operation flag is a flag for indicating that it is estimated that the controller is operated as a mouse. The state of the controller and the mouse operation flag are controlled by an operating system (sometimes referred to as "OS") operated by the processor 63.

### [Details of information processing of exemplary embodiment]

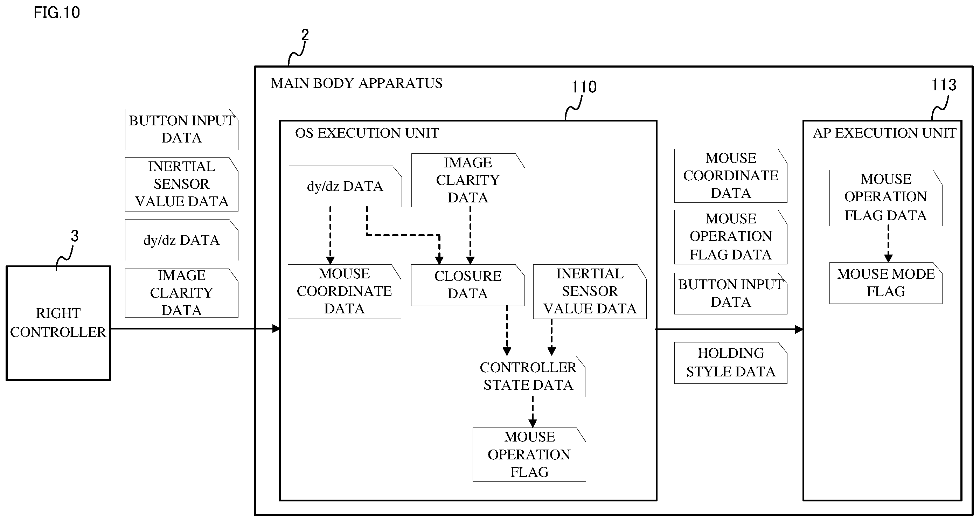

Next, the information processing of the exemplary embodiment will be described in detail with reference to FIG. 10 to FIG. 16. In the following, a description will be given with the case where the right controller 3 is used as an example. The same applies to the case where the left controller 4 is used, and thus the description of such a case is omitted.

### [Example of functional blocks of information processing system]

FIG. 10 is a diagram showing an example of functional blocks of an information processing system 1. As shown in FIG. 10, the main body apparatus 2 has an OS execution unit 110 and an application (sometimes referred to as "AP") execution unit 113. The processing, etc., of each unit will be described below.

As shown in FIG. 10, data detected, etc., by each sensor and input unit of the right controller 3 is transmitted from the right controller 3 to the OS execution unit 110. This data includes, for example, image clarity data, dy/dz data, inertial sensor value data, and button input data. The data transmitted from the right controller 3 to the OS execution unit 110 may include data other than these.

The image clarity data is data indicating the clarity of a mouse sensor image. The image clarity data is data calculated by the mouse sensor 24. The image clarity data is calculated based on the degree of brightness of the mouse sensor image and/or the degree regarding the number of feature points in the mouse sensor image, for example. The degree of brightness of the mouse sensor image or the degree regarding the number of feature points in the mouse sensor image may be directly used as the image clarity data. In addition, the image clarity data may be calculated based on another element. If the clarity indicated by the image clarity data is equal to or greater than a predetermined value, it can be estimated that the opening 23 of the mouse sensor 24 is closed by a placement surface or the like. Other data may be used instead of the data indicating the clarity of the mouse sensor image, if the other data is data from which it can be estimated that the opening 23 of the mouse sensor 24 is closed.

The dy/dz data is output data of the mouse sensor 24. When the opening 23 of the mouse sensor 24 is closed by a placement surface or the like, the dy/dz data is data indicating a movement distance per frame time in the y-axis direction and the z-axis direction in the coordinate system of the right controller 3 (i.e., the yz plane; see FIG. 2) relative to the placement surface or the like.

The inertial sensor value data is data outputted from the inertial sensor of the right controller 3 and is, for example, data that allows calculation of accelerations in the x, y, and z-axis directions (see FIG. 2) in the coordinate system of the right controller 3 and angular velocities around the x, y, and z axes. For example, the orientation, movement, etc., of the right controller 3 can be calculated using the inertial sensor value data.

The button input data is data indicating operations performed on each button 95 and the stick 22 of the right controller 3.

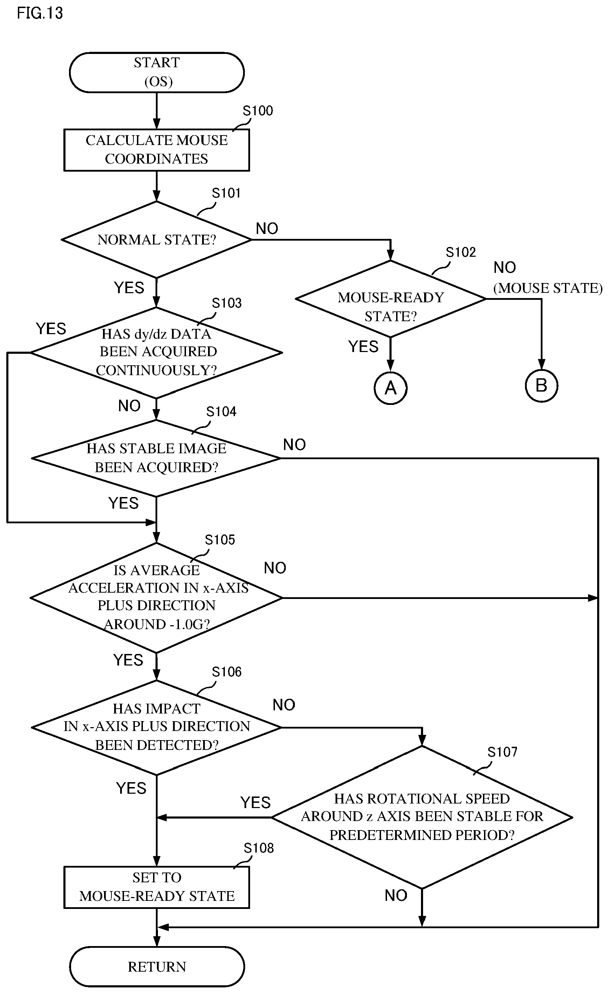

The OS execution unit 110 calculates mouse coordinate data indicating the latest mouse coordinates in a mouse coordinate plane that defines the movement of the right controller 3 as a mouse, using the dy/dz data. The OS execution unit 110 performs closure determination of determining whether or not the opening 23 of the right controller 3 is closed, using the dy/dz data and the image clarity data, and generates closure data indicating the result of the closure determination. The process of the closure determination corresponds to determination processes in steps S103, S104, S110, S111, S120, and S121 described later using FIG. 13 to FIG. 15. The OS execution unit 110 sets the state of the right controller 3, based on the closure data and the inertial sensor value data (see FIG. 9). The set state is stored as controller state data. The OS execution unit 110 sets a mouse operation flag for the right controller 3 to ON or OFF, based on the state of the right controller 3 (see FIG. 9).

The OS execution unit 110 sets the holding style of the right controller 3 in response to a user input and generates holding style data. The user can set the holding style of the right controller 3, for example, by opening a predetermined setting menu and performing a predetermined operation. The holding style includes a longitudinal holding style illustrated in FIG. 7 and a horizontal holding style illustrated in FIG. 8. For example, the user may be able to set the holding style according to their operational preferences, the game to be played, etc., or the holding style may be set by the game. The AP execution unit 113 can set the function of each button 95 of the right controller 3 to a predetermined function according to the holding style. The OS execution unit 110 may automatically determine the holding style, based on input data.

In response to a request from the AP execution unit 113, data is transmitted from the OS execution unit 110 to the AP execution unit 113. The transmitted data includes, for example, mouse coordinate data, mouse operation flag data indicating the ON/OFF state of the mouse operation flag, button input data, and holding style data. Only a part or some of these data may be inputted to the AP execution unit 113, or other data may be inputted. In addition, the data may be transmitted constantly or may be transmitted only when updated.

The AP execution unit 113 performs mouse mode determination of determining whether or not to cause a currently executed application to operate in a mouse mode, using the mouse operation flag data. For example, the AP execution unit 113 sets a mouse mode flag to ON when the mouse operation flag data indicates ON, and sets the mouse mode flag to OFF when the mouse operation flag data indicates OFF.

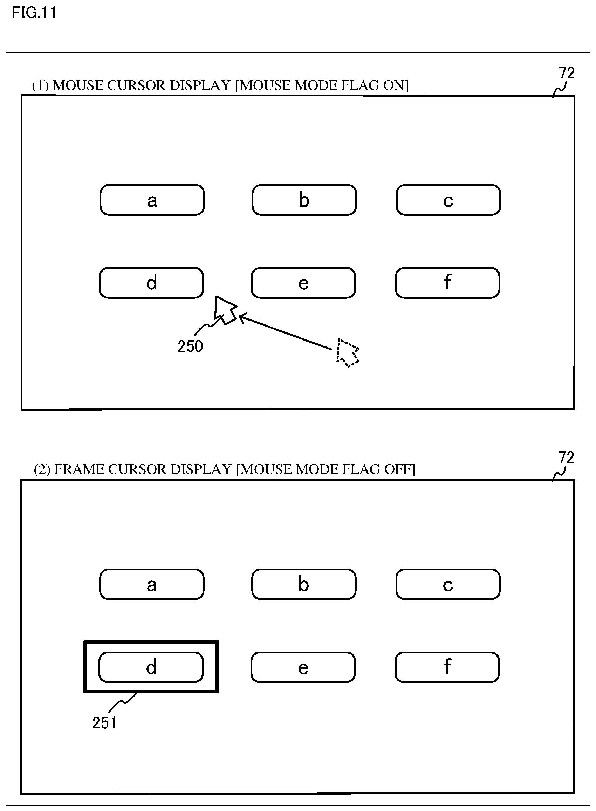

FIG. 11 is a diagram for describing an example of control corresponding to ON/OFF of the mouse operation flag and shows a scene in which the AP execution unit 113 executes a home menu application and a home menu is displayed. As shown in FIG. 11, for example, button images a to f for executing corresponding functions, respectively, are displayed in the home menu.

When the mouse mode flag is ON, as shown in FIG. 11(1), a mouse cursor (sometimes referred to simply as "cursor") 250 which is a virtual object that can be displayed so as to move by operating the right controller 3 as a mouse (sometimes referred to as "mouse operation") is displayed, and the displayed cursor 250 moves in response to a mouse operation on the right controller 3. In addition, in the exemplary embodiment, when the mouse operation flag is ON, the R button 20 and the ZR button 21 of the right controller 3 function as the left-click button and the right-click button of a mouse, respectively. For example, in the home menu display in FIG. 11(1), if the R button 20 is operated in a state where the tip of the cursor 250 is located on the button image d, the function associated with the button image d is executed. The function assigned to each button is not particularly limited, and for example, the same function may be assigned to the R button 20 and the ZR button 21. In addition, a decision function may be assigned to the button 14, the button 12, etc., or to the button 12 alone.

When the mouse mode flag is OFF, as shown in FIG. 11(2), the cursor 250 is not displayed, while a frame cursor (sometimes referred to simply as "cursor") 251 indicating any one button image is displayed. The frame cursor 251 is moved discontinuously to a position surrounding another button image in response to an operation on the directional input portion. In the exemplary embodiment, the non-displayed mouse cursor 250 is not controlled to move in accordance with the output data from the mouse sensor 24 but may be controlled to move. In addition, in the exemplary embodiment, when the mouse mode flag is OFF, the R button 20 and the ZR button 21 of the right controller 3 do not function as the left-click button and the right-click button of a mouse. On the other hand, for example, if the button 12 is pressed, the function associated with the button image surrounded by the frame cursor 251 is executed. In this case, the R button 20 and the ZR button 21 of the right controller 3 may execute other functions when operated. The AP execution unit 113 may perform button function control on the right controller 3 depending on whether or not the current mode is the mouse mode. For example, when the current mode is set to the mouse mode, the AP execution unit 113 applies button operation interpretation for a mouse mode to button operations on the right controller 3, and when the current mode is not set to the mouse mode, the AP execution unit 113 applies operation interpretation for a non-mouse mode to button operations on the right controller 3. The stick 22 may be included in the application target of the button operation interpretation. For example, when the current mode is not the mouse mode, the cursor may be moved in response to an operation on the stick 22, and when the current mode is the mouse mode, a display screen or items to be selected in a list may be scrolled in response to an operation of turning the stick 22, similar to a wheel operation on a mouse.

When the current mode is not the mouse mode, the AP execution unit 113 may perform button function control on the right controller 3, based on the holding style data. Specifically, if it is determined that the holding style is set to the longitudinal holding style, the AP execution unit 113 may apply button operation interpretation for the longitudinal holding style to button operations on the right controller 3, and if it is determined that the holding style is set to the horizontal holding style, the AP execution unit 113 may apply button operation interpretation for the horizontal holding style to button operations on the right controller 3. In addition, if it is determined that the current mode is the mouse mode, the AP execution unit 113 may apply the button operation interpretation for a mouse mode to button operations on the right controller 3 regardless of whether the holding style is set to the longitudinal holding style or the horizontal holding style.

The OS execution unit 110 may input the controller state data to the AP execution unit 113. As a result, the AP execution unit 113 can execute control corresponding to the state and, for example, can execute processing such as predetermined display processing in the mouse-ready state. In addition, the OS execution unit 110 may input the closure data indicating the result of the closure determination described above to the AP execution unit 113. As a result, for example, an operation of the user closing or opening the opening 23 with a finger or the like can be treated as a button operation. For example, when the AP execution unit 113 executes a game application, the AP execution unit 113 can cause a virtual object to execute a predetermined action such as an attack, in response to an operation of the user closing the opening 23 with a finger while holding the right controller 3 in a horizontal holding manner (see FIG. 8). Data input from the OS execution unit 110 to the AP execution unit 113 may be performed, for example, by data being stored in the DRAM 69 such that the AP execution unit 113 can acquire the data.

### [Data to be used]

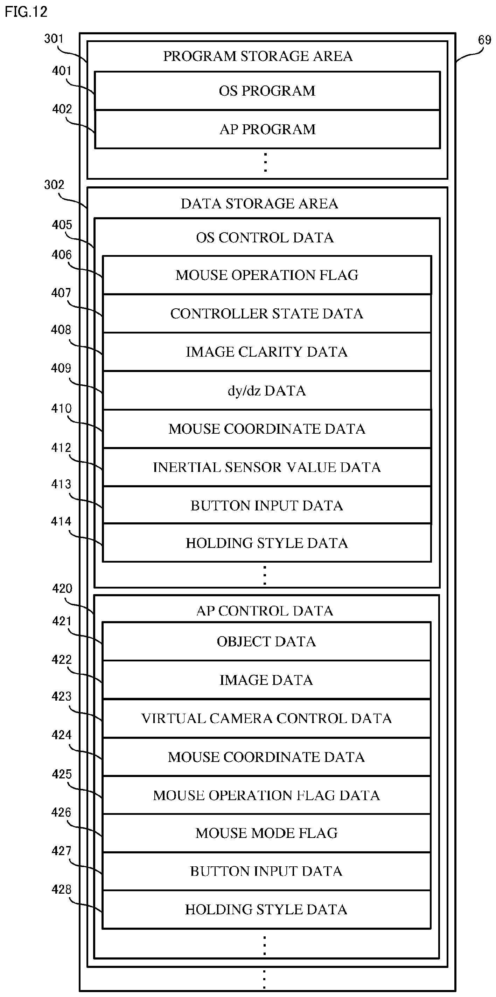

Next, various data stored in the DRAM 69 will be described. FIG. 12 shows an example of data stored in the DRAM 69 of the main body apparatus 2. As shown in FIG. 12, the DRAM 69 is provided with at least a program storage area 301 and a data storage area 302. In the program storage area 301, an OS program 401, an AP program 402, etc., are stored. The AP program 402 is an AP program for controlling the home menu, the setting menu, etc. Although not shown, AP programs such as a game program are also stored in the program storage area 301.

The data storage area 302 includes OS control data 405 to be used for control by the OS program 401 and AP control data 420 to be used for control by the AP program 402. In the exemplary embodiment, the OS control data 405 and the AP control data 420 are stored separately, but the OS control data 405 and the AP control data 420 may not necessarily be stored separately. In such a case, there is no need to store the same data separately.

The OS control data 405 includes a mouse operation flag 406, controller state data 407, image clarity data 408, dy/dz data 409, mouse coordinate data 410, inertial sensor value data 412, button input data 413, and holding style data 414. These data are the data described above.

The AP control data 420 includes object data 421, image data 422, virtual camera control data 423, mouse coordinate data 424, mouse operation flag data 425, a mouse mode flag 426, button input data 427, and holding style data 428.

The object data 421 is data for objects to be placed in a virtual space and is, for example, data for player characters, opponent characters, ground, menus, cursors, etc.

The image data 422 is image data for animation images, backgrounds, virtual effects, etc.

The virtual camera control data 423 is data for controlling a virtual camera placed in the virtual space to capture an image of the virtual space.

The mouse coordinate data 424, the button input data 427, and the holding style data 428 are data having the same contents as the mouse coordinate data 410, the button input data 413, and the holding style data 414 described above, respectively.

The mouse operation flag data 425 is data indicating whether the mouse operation flag 406 described above is ON or OFF.

The mouse mode flag 426 is a flag that is set to ON when the mouse operation flag 406 described above is ON, and is set to OFF when the mouse operation flag 406 is OFF, based on the mouse operation flag data 425.

In addition, various data to be used for rendering processing, etc., are stored in the DRAM 69 as necessary.

### [Details of processing according to exemplary embodiment]

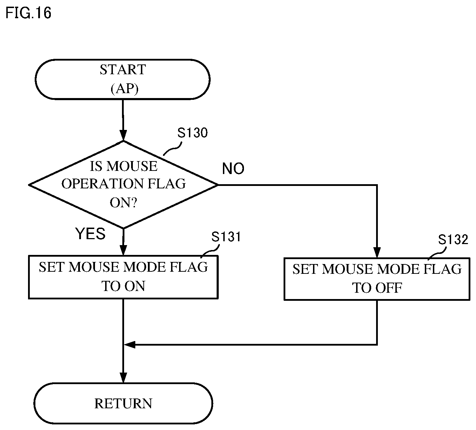

Next, the processing according to the exemplary embodiment will be described with reference to flowcharts. FIG. 13 to FIG. 16 are examples of flowcharts showing the processing according to the exemplary embodiment. The processing in the flowcharts in FIG. 13 to FIG. 15 is executed by the OS program 401, and the processing in the flowchart in FIG. 16 is executed by the AP program 402. In the following, processing characteristic to the exemplary embodiment will be described, and the description for other processing such as rendering processing is omitted. Furthermore, the following processing is executed at predetermined intervals (e.g., every processing frame, every 1/30 second).

When the processing by the OS program 401 is started, the processor 63 calculates mouse coordinates in step S100 in FIG. 13.

In step S101, the processor 63 refers to the controller state data 407 and determines whether or not the current state of the right controller 3 is the normal state. If the result of this determination is YES, the processing proceeds to step S103, and if the result of this determination is NO, the processing proceeds to step S102.

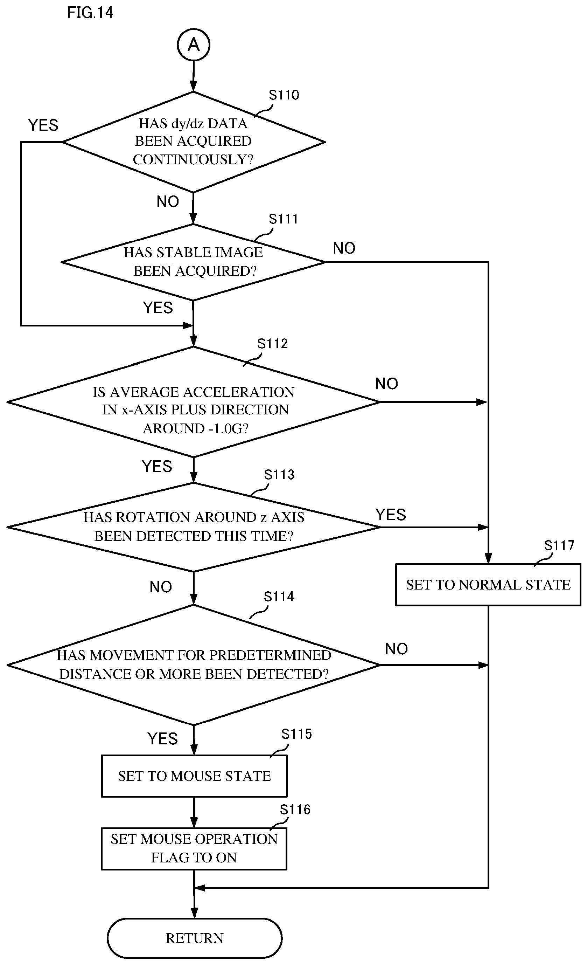

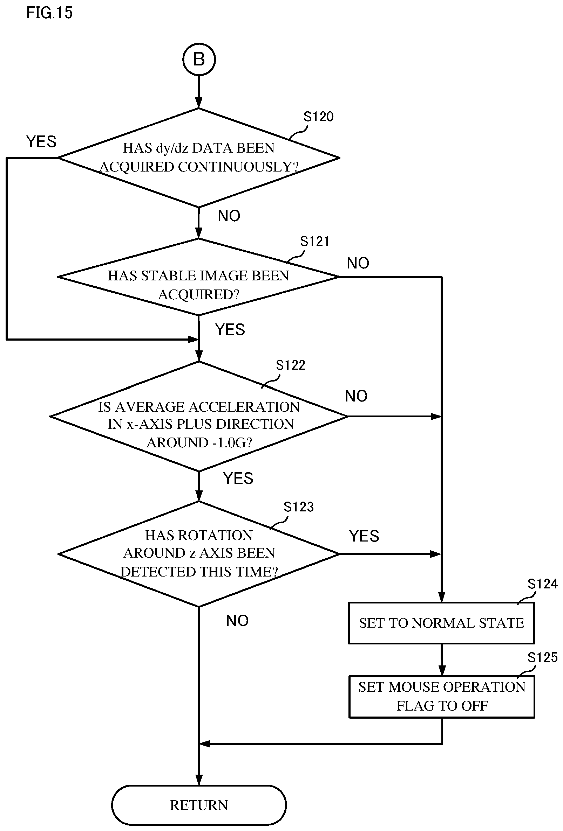

In step S102, the processor 63 refers to the controller state data 407 and determines whether or not the current state of the right controller 3 is the mouse-ready state. If the result of this determination is YES, the processing proceeds to step S110 in FIG. 14, and if the result of this determination is NO, the processing proceeds to step S120 in FIG. 15.

In step S103, the processor 63 determines whether or not the dy/dz data has been acquired continuously, using the most recent two dy/dz data 409 of the right controller 3. In other words, the processor 63 determines whether or not data indicating movement in the y-axis direction or data indicating movement in the z-axis direction has been acquired by the mouse sensor 24 of the right controller 3 in the most recent consecutive processing frames (see the x, y, and z axes in FIG. 2). If the result of this determination is YES, the processing proceeds to step S105, and if the result of this determination is NO, the processing proceeds to step S104.

In step S104, the processor 63 determines whether or not the mouse sensor 24 of the right controller 3 has acquired a stable image, based on the image clarity data 408. For example, if a predetermined value indicating the clarity of the image acquired by the mouse sensor 24 is equal to or greater than a predetermined threshold value, the processor 63 determines that the mouse sensor 24 has acquired a stable image, that is, has acquired an image whose clarity is equal to or greater than a predetermined value. If the result of this determination is YES, the processing proceeds to step S105, and if the result of this determination is NO, the processing returns to step S100. Here, the condition "the predetermined value is equal to or greater than a predetermined threshold value" is, for example, a condition that is satisfied if the degree of brightness of the image acquired by the mouse sensor 24 (i.e., the amount of light received by the mouse sensor 24) is equal to or greater than a predetermined value (or within a predetermined range) and or the degree regarding the number of feature points in the image acquired by the mouse sensor 24 (e.g., the degree of coarseness of the image) is equal to or greater than a predetermined value.

Here, when the opening 23 of the mouse sensor 24 is closed and the right controller 3 is moved, the dy/dz data is considered to output a value indicating the movement of the controller. By using dy/dz data at multiple frames rather than one frame, it is at least possible to accurately estimate that the opening 23 is closed. In addition, even when the right controller 3 is not moved, if the mouse sensor 24 has acquired a stable image, it can be inferred that the opening 23 is closed. Therefore, if the result of the determination in step S103 is YES, or if the result of the determination in step S104 is YES, it can be said that the current state is a state where it can be estimated that the opening 23 of the mouse sensor 24 is closed.

In step S105, the processor 63 determines whether or not the average acceleration in the x-axis plus direction in the coordinate system (see FIG. 2) of the right controller 3 is around -1.0G, that is, around the gravitational acceleration. Specifically, the processor 63 determines whether or not the average acceleration in the x-axis plus direction for a predetermined time (e.g., the most recent five processing frames) is, for example, a value that is greater than -1.15 G and smaller than -0.85 G, based on the inertial sensor value data 412 of the right controller 3. Through this determination, it can be estimated that the current state is a state where the bottom portion of the right controller 3 is facing downward. This "state where the bottom portion is facing downward" is a state where the bottom portion is facing in the direction of gravity and includes not only a state where the bottom portion is facing exactly downward (i.e., in the direction of gravity) but also a state where the bottom portion is tilted by a predetermined degree relative to the exactly downward direction. In addition, in step S105, the processor 63 may determine whether or not the x axis in the coordinate system of the right controller 3 is tilted at 45 degrees or less relative to the direction of gravity. If the result of this determination is YES, the processing proceeds to step S106, and if the result of this determination is NO, the processing returns to step S100.

In step S106, the processor 63 determines whether or not an impact in the x-axis plus direction in the coordinate system of the right controller 3 has been detected. Specifically, the processor 63 determines whether or not, for example, an acceleration equal to or greater than a predetermined value (e.g., 2.0G or more) has been detected in the x-axis plus direction, based on the inertial sensor value data 412 of the right controller 3. Through this determination, it can be estimated that the right controller 3 is placed on a placement surface or the like. If the result of this determination is YES, the processing proceeds to step S108, and if the result of this determination is NO, the processing proceeds to step S107.

In step S107, the processor 63 determines whether or not the rotational speed around the z axis in the coordinate system of the right controller 3 has been stable for a predetermined period. Specifically, the processor 63 determines whether or not, for example, the average rotational speed around the z axis for a predetermined period (e.g., the most recent five processing frames) (sometimes referred to as "first parameter") is equal to or less than a first threshold value, based on the inertial sensor value data 412 of the right controller 3. Through this determination, it can be determined that the right controller 3 is in a state of being stationary around the z axis. This "state of being stationary around the z axis" is a state of not rotating around the z axis and includes not only a state of being completely stationary around the z axis but also a state of slightly rotating. If the result of this determination is YES, the processing proceeds to step S108, and if the result of this determination is NO, the processing returns to step S100.

In another exemplary embodiment, in step S107, the processor 63 may determine whether or not both the rotational speed around the z axis and the rotational acceleration around the y axis in the coordinate system of the right controller 3 have been stable for a predetermined period. Specifically, the processor 63 may determine whether or not, for example, the average rotational speed around the z axis for a predetermined period (e.g., the most recent five processing frames) is equal to or less than a first threshold value and the average rotational speed around the y axis for the predetermined period (sometimes referred to as "second parameter") is equal to or less than a second threshold value (the second threshold value is greater than the first threshold value), based on the inertial sensor value data 412 of the right controller 3. Through this determination, it can be determined whether or not the right controller 3 is in a state of being stationary around the z axis and the y axis. This "state of being stationary around the z axis and the y axis" is a state of not rotating around the z axis and the y axis and includes not only a state of being completely stationary around the z axis and the y axis but also a state of slightly rotating around at least one of these axes. In step S107, the processor 63 may determine whether or not only the rotational acceleration around the y axis in the coordinate system of the right controller 3 has been stable for a predetermined period. Compared to when the right controller 3 is placed on a wide, stable placement surface such as a desk, rotation around axes parallel to the bottom portion is more likely to occur when the opening 23 of the mouse sensor 24 is covered by a finger or the like. By monitoring rotation around the axes parallel to the bottom portion, it can be estimated that the controller is placed on a stable placement surface. When the controller is operated like a mouse, the controller may be more likely to be titled in the left-right direction than in the front-rear direction. In particular, the controller according to the exemplary embodiment has a shorter length in the left-right direction than in the front-rear direction and has a longer length in the up-down direction than in the left-right direction. Thus, the controller according to the exemplary embodiment may be likely to be titled in the left-right direction. Therefore, by monitoring whether or not the controller is stationary around the axes parallel to the bottom portion while prioritizing the z axis or only around the z axis, it is possible to inhibit the controller from being estimated to be separated from the placement surface contrary to the user's intention when the user unintentionally rotates the controller around the y axis. There can also be an effect of being able to, when the user performs a mouse operation on the controller on a placement surface curved in the left-right direction such as a thigh, inhibit the controller from being estimated to be separated from the placement surface contrary to the user's intention.

In step S108, the processor 63 sets the state of the right controller 3 to the mouse-ready state. Specifically, the processor 63 performs the first state transition (see FIG. 9) and updates the state of the right controller 3 indicated by the controller state data 407 to the mouse-ready state. Then, the processing returns to step S100.

Next, the flowchart in FIG. 14 will be described. Processes in steps S110 to S112 in FIG. 14 are the same as the processes in steps S103 to S105 in FIG. 13, respectively.

In step S113, the processor 63 determines whether or not rotation around the z axis in the coordinate system of the right controller 3 has been detected in the current processing frame, based on the inertial sensor value data 412. For example, the processor 63 determines whether or not a rotational speed around the z axis of the right controller 3 that is equal to or greater than a predetermined value has been detected in the latest processing frame. In addition, this determination is determination based on the duration of a single processing frame, and thus is based on a period less than the predetermined period (e.g., the most recent five processing frames) used for the determination in step S107. Due to this, this determination can also be said to determine whether or not the right controller 3 is stationary around the z axis, in each processing frame, that is, in a cycle of a short time. Through the determination in step S113, it can be instantly determined whether the right controller 3 placed on a placement surface is not on a stable placement surface, for example, whether or not the right controller 3 has been lifted from the placement surface. If the result of this determination is YES, the processing proceeds to step S117, and if the result of this determination is NO, the processing proceeds to step S114.

In step S114, the processor 63 determines whether or not movement of the right controller 3 for a predetermined distance (e.g., 3 mm) or more has been detected, based on the dy/dz data 409. In other words, the processor 63 determines whether or not the right controller 3 is in a state of moving on a placement surface. If the result of this determination is YES, the processing proceeds to step S115, and if the result of this determination is NO, the processing returns to step S100 in FIG. 13.

In step S115, the processor 63 sets the state of the right controller 3 to the mouse state. Specifically, the processor 63 performs the second state transition (see FIG. 9) and updates the state of the right controller 3 indicated by the controller state data 407 to the mouse state. Then, the processing proceeds to step S116.

In step S116, the processor 63 sets the mouse operation flag 406 of the right controller 3 to ON. Then, the processing returns to step S100 in FIG. 13.

In step S117, the processor 63 sets the state of the right controller 3 to the normal state. Specifically, the processor 63 performs the third state transition (see FIG. 9) and updates the state of the right controller 3 indicated by the controller state data 407 to the normal state. Then, the processing returns to step S100 in FIG. 13.

Next, the flowchart in FIG. 15 will be described. Processes in steps S120 to S123 in FIG. 15 are the same as the processes in steps S110 to S113 in FIG. 14, respectively.

In step S124, the processor 63 sets the state of the right controller 3 to the normal state. Specifically, the processor 63 performs the fourth state transition (see FIG. 9) and updates the state of the right controller 3 indicated by the controller state data 407 to the normal state. Then, the processing proceeds to step S125.

In step S125, the processor 63 sets the mouse operation flag 406 of the right controller 3 to OFF. Then, the processing returns to step S100 in FIG. 13.

Next, the flowchart in FIG. 16 will be described. When the processing by the AP program 402 is started, in step S130, the processor 63 refers to the mouse operation flag data 425 and determines whether or not the mouse operation flag 406 is ON. If the result of this determination is YES, the processing proceeds to step S131, and if the result of this determination is NO, the processing proceeds to step S132.

In step S131, the processor 63 sets the mouse mode flag 426 of the right controller 3 to ON. Then, the processing returns to step S100 in FIG. 13. An example of the processing performed when the mouse mode flag 426 is ON is as described above.

In step S132, the processor 63 sets the mouse mode flag 426 of the right controller 3 to OFF. Then, the processing returns to step S100 in FIG. 13. An example of the processing performed when the mouse mode flag 426 is OFF is as described above.

In another exemplary embodiment, by control by the OS program 401, for example, control for the button functions of the controller may be switched, for example, based on the controller state data 407 or the mouse operation flag 406. In addition, in another exemplary embodiment, the controller may generate controller state data and a mouse operation flag and transmit these data to the main body apparatus by the communication control unit or the like (see FIG. 5).

As described above, according to the exemplary embodiment, if movement of the controller is detected (see FIG. 13 and FIG. 14) in a state where the controller is not rotating from a state where the opening of the mouse sensor is closed and the bottom portion is facing downward, the mouse operation flag is set to ON. Thus, according to the exemplary embodiment, it is possible to accurately estimate that a mouse operation is performed on the controller, thereby improving the user's sense of operation. In addition, according to the exemplary embodiment, whether it is estimated that the controller is being used as a mouse can be determined by the processing on the OS program side, and control of the cursor 250, control of the button functions of the controller, etc., can be switched by the processing on the AP program side, depending on the estimation.

### [Modifications]

In the exemplary embodiment described above, the example of two types, the determination process in step S107 in FIG. 13 and the determination process in step S113 in FIG. 14 (the same process as the determination process in step S123 in FIG. 15), has been described as the determination as to whether or not the controller is in a state of being stationary around the z axis parallel to the bottom portion of the controller. However, for example, the processes executed in these steps may be the same process (i.e., one type) or may be three or more types of processes.

In addition, in the exemplary embodiment described above, the example in which, in the determination process in step S107 in FIG. 13 and the determination process in step S113 in FIG. 14 (the same process as the determination process in step S123 in FIG. 15), determination is performed by comparison with a predetermined value serving as a criterion for the determination, has been described. However, in these determination processes, determination may be performed by another method, instead of comparison with a predetermined value. In addition, in these determination processes, determination may be performed using rotational acceleration in addition to the rotational speed, or determination may be performed using only rotational acceleration. Furthermore, determination may be performed using another parameter.

In addition, in the exemplary embodiment described above, some or all of the processes described with reference to FIG. 13 to FIG. 15 may be executed by the AP execution unit 113 or may be executed on the controller side, that is, by the communication control unit and the memory (see FIG. 5) of the controller.

In addition, in the exemplary embodiment described above, in the flowchart in FIG. 15, if a state where the results of the determination in steps S120 and S121 are both NO continues to be determined for a predetermined time (e.g., 0.5 seconds), control of shifting to the determination in step S124 and setting to the normal state may be performed. By performing such control, for example, it is possible to inhibit the normal state from being transitioned to at the moment at which the controller is lifted, when the user performs a mouse operation on the controller to move the controller on a placement surface, then slightly lift the controller from the placement surface, return the controller to the original position, and move the controller again.

In addition, in the exemplary embodiment described above, in a state where the mouse mode flag is OFF, the frame cursor 251 is displayed instead of the mouse cursor 250 (see FIG. 11 and FIG. 16), but the mouse cursor 250 may be displayed without displaying the frame cursor 251, and the mouse cursor 250 may be operated to move by an operation on the directional input portion. Moreover, in a state where the mouse mode flag is ON, the mouse cursor 250 may be able to be operated to move by a mouse operation or an operation on the directional input portion.

In addition, in the exemplary embodiment described above, the cursor display and the button function control are switched between two states, depending on whether the mouse mode flag is ON or OFF, but may be switched between three or more states. A mode that is not any of the states may be included. For example, the home menu application may be operable by touch operations on the display or the touch panel provided on the controller or the like. For example, items such as button images may be selectable by touch operations. In this case, for example, a mouse mode (see FIG. 11(1)), a directional input portion mode (see FIG. 11(2)), and a touch mode may be switched. In addition, the cursor may not necessarily be displayed in the touch mode. For example, when the frame cursor is displayed in the directional input portion mode, if a touch is made on the touch panel, switching to the touch mode may be performed and the frame cursor may no longer be displayed. A cursor for a touch operation may be displayed instead of a cursor for the directional input portion mode. For example, even when the mouse operation flag data indicates ON, if a touch is detected, switching to the touch mode may be performed. As for the mouse mode, the directional input portion mode, and the touch mode, switching from any mode to any other mode may be performed based on at least one of mouse operation flag data, directional input portion or button operation data, and touch operation data. In this case, data used when switching from a first mode to a second mode may be the same as or different from data used when switching from the second mode to the first mode or when switching between a third mode and the first or second mode in at least one direction. As already mentioned, the condition under which the mouse operation flag data is data indicating ON or OFF in the exemplary embodiment is an example. This condition may be different, and the mouse operation flag data may be any data for estimating whether or not a mouse operation is being performed. Moreover, the data format may not necessarily be a flag.

In addition, in the exemplary embodiment described above, a configuration without a mouse-ready state may be provided. Furthermore, a configuration without any state may be provided.

Furthermore, the example of the virtual object to be controlled by mouse operations is not limited to the mouse cursor 250, may be another object, and may be, for example, an aim, a bullet, a player character, or the like. In one AP program, there may be a plurality of virtual objects that can be controlled by mouse operations, and the virtual object to be controlled by mouse operations may be switched.

In addition, in the exemplary embodiment described above, the mouse coordinate data may be used in the process in which the dy/dz data is used, and dz/dy data may be used in the process in which the mouse coordinate data is used. Moreover, the various data in the exemplary embodiment are examples, and other data converted therefrom, etc., may be used as appropriate in each process.

In addition, the game system is an example of the information processing system, and the information processing system may be a system in which no game is executed. Moreover, the main body apparatus may be a general-purpose personal computer. Furthermore, the controller may be a general-purpose mouse.

In an information processing system including a terminal-side apparatus and a server-side apparatus capable of communicating therewith via a network, at least some of the series of processes described above may be executed by the server-side apparatus. The server may be composed of a plurality of information processing apparatuses, and the processes may be executed by the plurality of information processing apparatuses in a shared manner.

While the exemplary embodiment and the modifications have been described, the description thereof is in all aspects illustrative and not restrictive. It is to be understood that various other modifications and variations may be made to the exemplary embodiment and the modifications.

## Claims

1. An information processing method using an input device (3, 4) including an inertial sensor (83, 84, 96, 97), an optical mouse sensor (24, 44), and a housing (11, 31) having a bottom portion having an opening (23, 43) of a light guide path for guiding light to the mouse sensor, the information processing method comprising:
determining a first state where the opening is closed, based on output of the mouse sensor;
determining a second state where the bottom portion is facing downward, based on output of the inertial sensor;
determining a third state where the input device is stationary around at least a first axis among axes parallel to the bottom portion, based on the output of the inertial sensor;
**characterized by**
controlling a displayed virtual object, based on the output of the mouse sensor, when at least the first state, the second state, and the third state are determined; and
switching from a first information processing state where the virtual object is not displayed to a second information processing state where the virtual object is displayed, based on at least the first state, the second state, and the third state being determined.

2. The information processing method according to claim 1, wherein
the input device has
an upper portion on a side opposite to the bottom portion, and
a front portion and a rear portion connecting the bottom portion and the upper portion on a front side and a rear side, respectively, in a front-rear direction that is parallel to the bottom portion and is a longitudinal direction,
the input device includes a first button on at least one of the front portion side of the upper portion or the front portion, and
the third state is at least a state of being stationary around the first axis extending in a left-right direction that is parallel to the bottom portion and perpendicular to the front-rear direction.

3. The information processing method according to claim 2, wherein the third state is a state where a first parameter indicating a degree of rotation around the first axis is equal to or less than a first threshold value.

4. The information processing method according to claim 3, wherein the third state is further a state where a second parameter indicating a degree of rotation around a second axis extending in the front-rear direction is equal to or less than a second threshold value greater than the first threshold value.

5. The information processing method according to claim 3, wherein the third state is a state where the first parameter is equal to or less than the first threshold value regardless of a value of the second parameter indicating the degree of rotation around the second axis extending in the front-rear direction.

6. The information processing method according to claim 4 or 5, wherein the input device is longer in an up-down direction perpendicular to the front-rear direction and the left-right direction than in the left-right direction.

7. The information processing method according to claim 1, further comprising:
determining a fourth state where the input device is moving on a placement surface, based on the output of the mouse sensor; and
controlling the displayed virtual object, based on the output of the mouse sensor, when the fourth state is determined in addition to the first state, the second state, and the third state being determined.

8. The information processing method according to claim 1, wherein
the input device has
an upper portion on a side opposite to the bottom portion, and
a front portion and a rear portion connecting the bottom portion and the upper portion on a front side and a rear side, respectively, in a front-rear direction that is parallel to the bottom portion and is a longitudinal direction,
the input device includes a first button on at least one of the front portion side of the upper portion or the front portion, and
the information processing method further comprises: executing a predetermined process in response to an operation on the first button when at least the first state, the second state, and the third state are determined; and not executing the predetermined process in response to the operation when at least one of the first state, the second state, and the third state is not determined.

9. The information processing method according to claim 8, wherein
the input device includes a second button, and
the information processing method further comprises executing the predetermined process in response to an operation on the second button when at least one of the first state, the second state, and the third state is not determined.

10. The information processing method according to claim 1, wherein
the information processing method comprises at least operating system processing and application processing, and
the operating system processing comprises storing information regarding a determination result of the first state and information regarding a determination result of at least the first state, the second state, and the third state being determined, such that each of the information is usable in the application processing.

11. The information processing method according to claim 1, wherein
the information processing method comprises at least operating system processing, and
the operating system processing comprises: determining whether the input device is at least set to a longitudinal holding setting or a horizontal holding setting; and determining the first state, the second state, and the third state if the input device is determined to be set to the longitudinal holding setting or the horizontal holding setting.

12. An information processing system comprising means for executing the information processing method according to claim 1.

13. An information processing program that, when executed by a computer, causes the computer to execute the information processing method according to claim 1.

## Patentansprüche

1. Ein Informationsverarbeitungsverfahren unter Verwendung einer Eingabevorrichtung (3, 4), die einen Trägheitssensor (83, 84, 96, 97), einen optischen Maussensor (24, 44) und ein Gehäuse (11, 31) mit einem Bodenabschnitt mit einer Öffnung (23, 43) eines Lichtführungspfads zum Führen von Licht zu dem Maussensor hat, wobei das Informationsverarbeitungsverfahren umfasst:
Bestimmen eines ersten Zustands, in dem die Öffnung geschlossen ist, basierend auf Ausgabe des Maussensors;
Bestimmen eines zweiten Zustands, in dem der Bodenabschnitt nach unten gewandt ist, basierend auf Ausgabe des Trägheitssensors;
Bestimmen eines dritten Zustands, in dem die Eingabevorrichtung stationär um mindestens eine erste Achse unter Achsen parallel zu dem Bodenabschnitt ist, basierend auf der Ausgabe des Trägheitssensors;
**gekennzeichnet durch**
Steuern eines angezeigten virtuellen Objekts, basierend auf der Ausgabe des Maussensors, wenn mindestens der erste Zustand, der zweite Zustand und der dritte Zustand bestimmt werden; und
Umschalten von einem ersten Informationsverarbeitungszustand, in dem das virtuelle Objekt nicht angezeigt wird, zu einem zweiten Informationsverarbeitungszustand, in dem das virtuelle Objekt angezeigt wird, basierend darauf, dass mindestens der erste Zustand, der zweite Zustand und der dritte Zustand bestimmt werden.

2. Das Informationsverarbeitungsverfahren nach Anspruch 1, wobei die Eingabevorrichtung
einen oberen Abschnitt auf einer Seite gegenüber dem Bodenabschnitt hat, und
einen vorderen Abschnitt und einen hinteren Abschnitt hat, die den Bodenabschnitt und den oberen Abschnitt auf einer Vorderseite bzw. einer Rückseite in einer Vorne-Hinten-Richtung verbinden, die parallel zu dem Bodenabschnitt ist und eine Längsrichtung ist,
die Eingabevorrichtung einen ersten Knopf auf zumindest einer von der Vorderabschnittsseite des oberen Abschnitts oder des vorderen Abschnitts hat, und
der dritte Zustand zumindest ein Zustand ist, in dem er stationär um die erste Achse ist, die sich in einer Links-Rechts-Richtung erstreckt, die parallel zu dem Bodenabschnitt und senkrecht zu der Vorne-Hinten-Richtung ist.

3. Das Informationsverarbeitungsverfahren nach Anspruch 2, wobei der dritte Zustand ein Zustand ist, in dem ein erster Parameter, der einen Grad der Drehung um die erste Achse angibt, gleich oder kleiner als ein erster Schwellenwert ist.

4. Das Informationsverarbeitungsverfahren nach Anspruch 3, wobei der dritte Zustand ferner ein Zustand ist, in dem ein zweiter Parameter, der einen Grad der Drehung um eine zweite Achse angibt, die sich in der Vorne-Hinten-Richtung erstreckt, gleich oder kleiner als ein zweiter Schwellenwert ist, der größer als der erste Schwellenwert ist.

5. Das Informationsverarbeitungsverfahren nach Anspruch 3, wobei der dritte Zustand ein Zustand ist, in dem der erste Parameter gleich oder kleiner als der erste Schwellenwert ist, unabhängig von einem Wert des zweiten Parameters, der den Grad der Drehung um die zweite Achse angibt, die sich in der Vorne-Hinten-Richtung erstreckt.

6. Das Informationsverarbeitungsverfahren nach Anspruch 4 oder 5, wobei die Eingabevorrichtung in einer Oben-Unten-Richtung senkrecht zu der Vorne-Hinten-Richtung und der Links-Rechts-Richtung länger als in der Links-Rechts-Richtung ist.

7. Das Informationsverarbeitungsverfahren nach Anspruch 1, ferner umfassend:
Bestimmen eines vierten Zustands, in dem sich die Eingabevorrichtung auf einer Platzierungsfläche bewegt, basierend auf der Ausgabe des Maussensors; und
Steuern des angezeigten virtuellen Objekts, basierend auf der Ausgabe des Maussensors, wenn der vierte Zustand zusätzlich dazu bestimmt wird, dass der erste Zustand, der zweite Zustand und der dritte Zustand bestimmt werden.

8. Das Informationsverarbeitungsverfahren nach Anspruch 1, wobei die Eingabevorrichtung hat
einen oberen Abschnitt auf einer Seite gegenüber dem Bodenabschnitt, und einen vorderen Abschnitt und einen hinteren Abschnitt, die den Bodenabschnitt und den oberen Abschnitt auf einer Vorderseite bzw. einer Rückseite in einer Vorne-Hinten-Richtung verbinden, die parallel zu dem Bodenabschnitt ist und eine Längsrichtung ist,
die Eingabevorrichtung einen ersten Knopf auf zumindest einer von der Vorderabschnittsseite des oberen Abschnitts oder des vorderen Abschnitts hat, und
das Informationsverarbeitungsverfahren ferner umfasst: Ausführen eines vorbestimmten Prozesses als Reaktion auf eine Betätigung an dem ersten Knopf, wenn zumindest der erste Zustand, der zweite Zustand und der dritte Zustand bestimmt werden; und Nicht-Ausführen des vorbestimmten Prozesses als Reaktion auf die Betätigung, wenn zumindest einer von dem ersten Zustand, dem zweiten Zustand und dem dritten Zustand nicht bestimmt wird.

9. Das Informationsverarbeitungsverfahren nach Anspruch 8, wobei die Eingabevorrichtung einen zweiten Knopf hat, und
das Informationsverarbeitungsverfahren ferner umfasst: Ausführen des vorbestimmten Prozesses als Reaktion auf eine Betätigung an dem zweiten Knopf, wenn zumindest einer von dem ersten Zustand, dem zweiten Zustand und dem dritten Zustand nicht bestimmt wird.

10. Das Informationsverarbeitungsverfahren nach Anspruch 1, wobei
das Informationsverarbeitungsverfahren zumindest Betriebssystemverarbeitung und Anwendungsverarbeitung umfasst, und
die Betriebssystemverarbeitung umfasst: Speichern von Information bezüglich eines Bestimmungsergebnisses des ersten Zustands und Information bezüglich eines Bestimmungsergebnisses von zumindest dem ersten Zustand, dem zweiten Zustand und dem dritten Zustand, die bestimmt werden, so dass jede der Information in der Anwendungsverarbeitung verwendbar ist.

11. Das Informationsverarbeitungsverfahren nach Anspruch 1, wobei
das Informationsverarbeitungsverfahren zumindest Betriebssystemverarbeitung umfasst, und
die Betriebssystemverarbeitung umfasst: Bestimmen, ob die Eingabevorrichtung zumindest auf eine Längshalteeinstellung oder eine Horizontalhalteeinstellung eingestellt ist; und Bestimmen des ersten Zustands, des zweiten Zustands und des dritten Zustands, wenn bestimmt wird, dass die Eingabevorrichtung auf die Längshalteeinstellung oder die Horizontalhalteeinstellung eingestellt ist.

12. Ein Informationsverarbeitungssystem, umfassend Mittel zum Ausführen des Informationsverarbeitungsverfahrens nach Anspruch 1.

13. Ein Informationsverarbeitungsprogramm, das, wenn es von einem Computer ausgeführt wird, den Computer veranlasst, das Informationsverarbeitungsverfahren nach Anspruch 1 auszuführen.

## Revendications

1. Un procédé de traitement de l'information utilisant un dispositif d'entrée (3, 4) comprenant un capteur inertiel (83, 84, 96, 97), un capteur de souris optique (24, 44), et un boîtier (11, 31) possédant une partie de dessous avec une ouverture (23, 43) d'un trajet de guide de lumière pour guider de la lumière vers le capteur de souris, le procédé de traitement de l'information comprenant :
la détermination d'un premier état dans lequel l'ouverture est fermée, sur la base d'une sortie du capteur de souris ;
la détermination d'un second état dans lequel la partie de dessous est tournée vers le bas, sur la base d'une sortie du capteur inertiel ;
la détermination d'un troisième état dans lequel le dispositif d'entrée est immobile au moins autour d'un premier axe parmi des axes parallèles à la partie de dessous, sur la base de la sortie de capteur optique ;
**caractérisé par**
le contrôle d'un objet virtuel affiché, sur la base de la sortie du capteur de souris, lorsqu'au moins le premier état, le second état, et le troisième état sont déterminés ; et
le basculement d'un premier état de traitement de l'information dans lequel l'objet virtuel n'est pas affiché vers un second état de traitement de l'information dans lequel l'objet virtuel est affiché, sur la base de ce qu'au moins le premier état, le second état, et le troisième état sont déterminés.

2. Le procédé de traitement de l'information selon la revendication 1, dans lequel
le dispositif d'entrée possède
une partie supérieure sur un côté opposé à la partie de dessous, et
une partie avant et une partie arrière reliant la partie de dessous et la partie supérieure sur un côté avant et sur un côté arrière, respectivement, dans une direction avant-arrière qui est parallèle à la partie de dessous et qui est une direction longitudinale,
le dispositif d'entrée comprend un premier bouton sur au moins l'un du côté de la partie avant de la partie supérieure ou de la partie avant, et
le troisième état est un état d'immobilité au moins autour du premier axe qui s'étend dans une direction gauche-droite qui est parallèle à la partie de dessous et perpendiculaire à la direction avant-arrière.

3. Le procédé de traitement de l'information selon la revendication 2, dans lequel le troisième état est un état dans lequel un premier paramètre indiquant un degré de rotation autour du premier axe est égal ou inférieur à une première valeur de seuil.

4. Le procédé de traitement de l'information selon la revendication 3, dans lequel le troisième état est un état dans lequel, en outre, un second paramètre indiquant un degré de rotation autour d'un second axe qui s'étend dans la direction avant-arrière est égal ou inférieur à une seconde valeur de seuil supérieure à la première valeur de seuil.

5. Le procédé de traitement de l'information selon la revendication 3, dans lequel le troisième état est un état dans lequel le premier paramètre est égal ou inférieur à la première valeur de seuil indépendamment d'une valeur du second paramètre qui indique le degré de rotation autour du second axe s'étendant dans la direction avant-arrière.

6. Le procédé de traitement de l'information selon la revendication 4 ou 5, dans lequel le dispositif d'entrée est plus long dans une direction haut-bas perpendiculaire à la direction avant-arrière et à la direction gauche-droite que dans la direction gauche-droite.

7. Le procédé de traitement de l'information selon la revendication 1, comprenant en outre :
la détermination d'un quatrième état dans lequel le dispositif d'entrée bouge sur une surface de placement, sur la base de la sortie du capteur de souris ; et
le contrôle de l'objet virtuel affiché, sur la base de la sortie du capteur de souris, lorsque le quatrième état est déterminé en plus du fait que le premier état, le second état, et le troisième état sont déterminés.

8. Le procédé de traitement de l'information selon la revendication 1, dans lequel :
le dispositif d'entrée possède
une partie supérieure sur un côté opposé à la partie de dessous, et
une partie avant et une partie arrière reliant la partie de dessous et la partie supérieure sur un côté avant et un côté arrière, respectivement, dans une direction avant-arrière qui est parallèle à la partie de dessous et qui est une direction longitudinale,
le dispositif d'entrée comprend un premier bouton sur au moins l'un du côté de la partie avant de la partie supérieure ou la partie avant, et
le procédé de traitement de l'information comprend en outre : l'exécution d'un processus prédéterminé en réponse à un actionnement sur le premier bouton, lorsqu'au moins le premier état, le second état, et le troisième état sont déterminés ; et l'absence d'exécution du processus prédéterminé en réponse à l'actionnement lorsqu'au moins l'un du premier état, du second état, et du troisième état n'est pas déterminé.

9. Le procédé de traitement de l'information selon la revendication 8, dans lequel
le dispositif d'entrée comprend un second bouton, et
le procédé de traitement de l'information comprend en outre l'exécution du processus prédéterminé en réponse à un actionnement sur le second bouton lorsqu'au moins l'un du premier état, du second état, et du troisième état n'est pas déterminé.

10. Le procédé de traitement de l'information selon la revendication 1, dans lequel
le procédé de traitement de l'information comprend au moins un traitement de système d'exploitation et un traitement applicatif, et
le traitement de système d'exploitation comprend le stockage d'une information concernant un résultat de détermination du premier état et une information concernant le fait qu'un résultat de détermination d'au moins le premier état, le second état, et le troisième état est déterminé, de sorte que chacune des informations est utilisable dans le traitement applicatif.

11. Le procédé de traitement de l'information selon la revendication 1, dans lequel
le procédé de traitement de l'information comprend au moins un traitement de système d'exploitation, et
le traitement de système d'exploitation comprend : la détermination si le dispositif d'entrée est disposé au moins avec une disposition de maintien longitudinal ou une disposition de maintien horizontal ; et la détermination du premier état, du second état, et du troisième état s'il est déterminé que le dispositif d'entrée est disposé avec la disposition de maintien longitudinal ou la disposition de maintien horizontal.

12. Un système de traitement de l'information comprenant des moyens pour exécuter le procédé de traitement de l'information selon la revendication 1.

13. Un programme de traitement de l'information qui, lorsqu'il est exécuté par un calculateur, fait en sorte que le calculateur exécute le procédé de traitement de l'information selon la revendication 1.
